# EUROPEAN PATENT APPLICATION

(11) **EP 2 290 982 A1**
(43) Date of publication of application: **02.03.2011**
(21) Application number: 09290642.9
(22) Date of filing: 25.08.2009
(51) Int. Cl.: H04N 7/24

(54) **Method for interactive delivery of multimedia content, content production entity and server entity for realizing such a method**

(71) Applicant: Alcatel Lucent, 75008 Paris (FR)
(72) Inventor: Verzijp, Nico Victor, 2018 Antwerpen (BE); Van den Berghe, Steven, 9620 Zottegem (BE); Vermoesen, Luc, 2880 Bornem (BE)
(74) Representative: Narmon, Gisèle Marie Thérèse

(57) **Abstract**

Method for interactive delivery of multimedia content to a user entity. The method includes the steps of :
- a server entity accepting from a content production entity interactive multimedia content including a plurality of content segments and control data for presentation of the multimedia content;
- the server entity sending to the user entity presentation information based on the control data;
- the server entity receiving from the user entity an interaction request at a receipt time, where the interaction request is based on the presentation information,
- the server entity transmitting at least one identified content segment of the content segments to the user entity based on the interaction request,

The control data comprises an actionmap containing time dependent action descriptors. The identified content segment is determined by activating a specific action descriptor of the actionmap in function of the receipt time and of information contained in the interaction request.

## Description

### The invention relates to a method for delivery of interactive content.

The known methods for delivering such content rely on a server, f.i. a VoD server, that allows linear content, f.i. video, to be played out in trick modes (forward, rewind, etc.). Trick mode support is generally done using additional content indexing. This indexing can be performed by VoD server itself. More advanced interactions (alternatives, non-linear scenarios, subset selection based on user interest, etc.) require a dedicated application to be created and downloaded on the client device. This requires a separate application to be created for each type of client (web, mobile, IPTV) and even for different devices of a certain client type (e.g. different IPTV settop boxes). As such, the same content item needs to be customized several times.

It is an object of the method according to the invention to allow more complex interactions and apply on-demand customization of content without the need to create a dedicated application for each type of client.

The method according to the invention realizes this object in that it includes the steps of :
- a server entity accepting from a content production entity interactive multimedia content including a plurality of content segments and control data for presentation of said multimedia content;
- said server entity sending to said user entity presentation information based on said control data;
- said server entity receiving from said user entity an interaction request at a receipt time, said interaction request being based on said presentation information,
- said server entity transmitting at least one identified content segment of said content segments to said user entity based on said interaction request,
**characterized in that** said control data comprises an actionmap containing time dependent action descriptors, said identified content segment being determined by activating a specific action descriptor of said actionmap in function of said receipt time and of information contained in said interaction request.

In this way content is conveyed in a more flexible way between the content producer and the server entity in a network. The content producer defines possible actions in function of time as reflected in the actionmap, and the interpretation of the actions is done in the network by the server entity. Interactivity and customization is thus directly driven by the content producer and adaption to different client types is done in the network by the server entity. Interpretation of user action is done in a very flexible way since the actionmap contains the possible actions and these actions can be different in function of time.

A feature of an embodiment of the method according to the invention is that said control data comprises user interface data, said presentation information being based on said user interface data in combination with said time dependent action descriptors.

In this way the content production entity can deliver new and possibly customized formats to networked clients serviced by the server entity as opposed to the known systems where the look of the interactive content such as DVD content is always the same.

Still additional features of the embodiment of the method according to the invention are that said presentation information is based on server specific user interface data combined with said time dependent action descriptors or that said presentation information is in addition based on server specific user interface data

The content producer may define the different interactions and possibly the format in which they are presented, but in this way the look and feel in which they are shown to the client may still be customized in the network by the server entity, possibly based on the user interface data inside the content. As an example, content created by producer Warner Bros and provided by Belgacom network provider, may have interaction buttons in the look and feel of Belgacom.

Another feature of an embodiment of the method according to the invention is that said control data comprises markers on at least one timeline that identifies a content segment and that transmission of said identified content segment is determined in function of said action descriptor in combination with a correlation of said receipt time with said markers.

In this way different actions are performed dependent on the time location in the content.

The invention also relates to a production entity and to a content server entity realizing the subject method.

Embodiments of the method and its features, and of the production entity and of the server entity realizing these are hereafter described, by way of example only, and with reference to the accompanying figures where :
- Fig. 1 represents a system with a content producer entity and a server entity that realize a method according to the invention,
- Fig. 2 represents the lay-out of a file with content and control data sent from the content producer entity of Fig. 1 to the server entity,
- Fig. 3 shows the working of the server entity of Fig. 1,
- Fig. 4 depicts how the server entity of Fig. 1 generates the different customizations for interaction with its users entities,
- Fig. 5 represents an example of a possible user interface lay out.

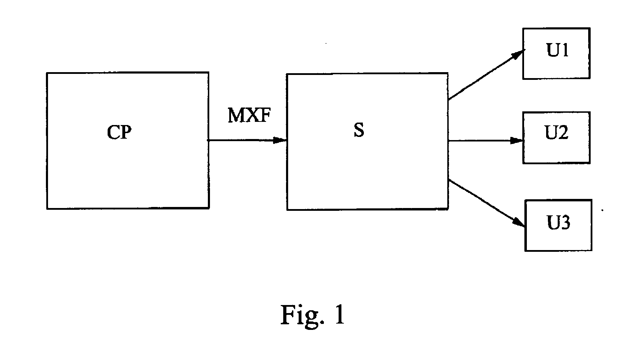

The system of Fig. 1 consists of a content production entity CP that produces Video on Demand (VoD) content and meta-data and sends these together as a file in a Material eXchange Format container (MXF) to a VoD server S servicing user entities U1, U2 and U3. These user entities can be diverse in nature, f.i. U1 is a television set with set top box, U2 is a web client and U3 is a mobile client. The MXF container format is compliant with the SMPTE standards, but has some additional meta-data elements as explained hereafter.

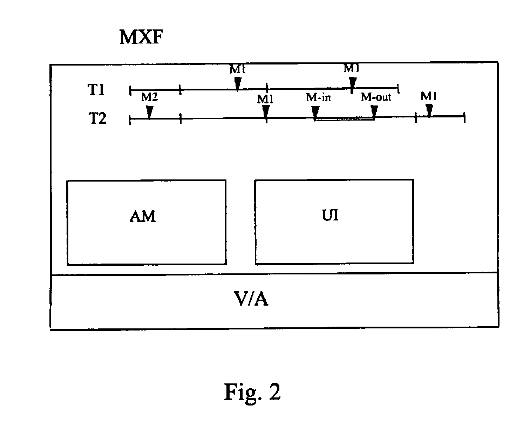

MXF as shown in Fig. 2 contains a bundle of multimedia segments called clips, V/A, being part of a video stream and a set of timelines T1 and T2 representing possible play-out sequences of the clips, as in the standard MXF formats. In addition MXF contains extra meta-data elements being timeline bound meta-data and global meta-data. The timeline bound meta-data can be a single mark or a region mark. A single mark such as M1 and M2 in Fig. 2 defines a particular time instance on the timeline. The meaning and possible actions behind such a mark is fixed by CP during an interactive video engineering phase where the possible interactions and their timing are defined. Examples of a single mark are a temporal jump point, a reference frame for image preview, a jump point to more detailed content, etc. A regional mark such as M-in and M-out in Fig. 2, defines a time interval on the timeline. Again, the meaning and possible actions behind this region is fixed during the interactive video engineering phase. Examples are non-skip-able regions, regions that can be replaced by (local) advertisement, etc. The possible actions behind the markers are represented by the global meta-data and are sent to the VoD server S within an actionmap AM contained in MXF. AM defines when and how transitions from one timeline to another or inside a single timeline can occur and lists all possible events that can be received from the user entities U1, U2 or U3 and that can trigger such transitions. These events trigger transitions in the sequence of the streaming of the clips.

For each event allowed by the CP, AM defines a resulting action. This resulting action is time dependent. In other words, it depends on the position in the play-out of the multimedia clips. As a concrete example, suppose that the event received from a user via his remote control is translated to "jump to the next temporal mark" at a time instant before M2 on T2 (Fig.2), then a jump to M2 will be executed. In case multiple time-lines are present, one of these is indicated as the default one. Users may jump to another timeline in case this is defined in the AM (similar to temporal jump on same timeline). The execution of an action can be dependent on additional conditions as indicated in AM.

As another example, suppose that the marked region M-in/M-out in Fig. 2, denotes a non-skip-able area and an event is received at a time instant within this region, then no temporal jump will be executed.

In the considered embodiment AM contains explicit actions. As an alternative, some "application profiles" may be defined, consisting of some predefined set of event-action pairs. In this case, AM may simply contain the application profile id. CP defines these profiles and they are known and stored by the server S.

In the considered embodiment the global meta-data also contains a user interface information block UI, but in an alternative embodiment the global meta-data can be limited to AM. UI contains layout indicators that enable S to create the lay out of a user interface for U 1, U2 and U3.

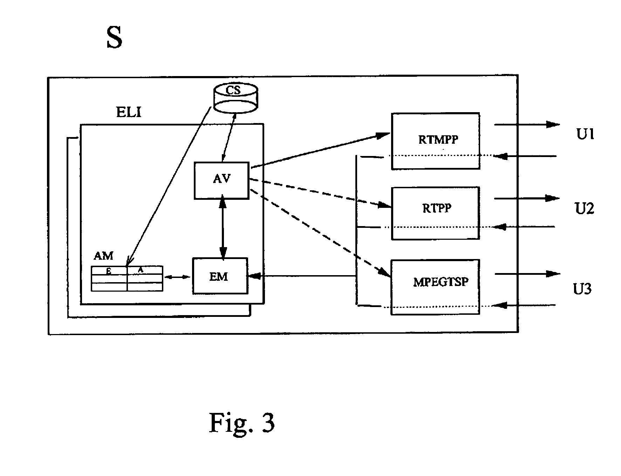

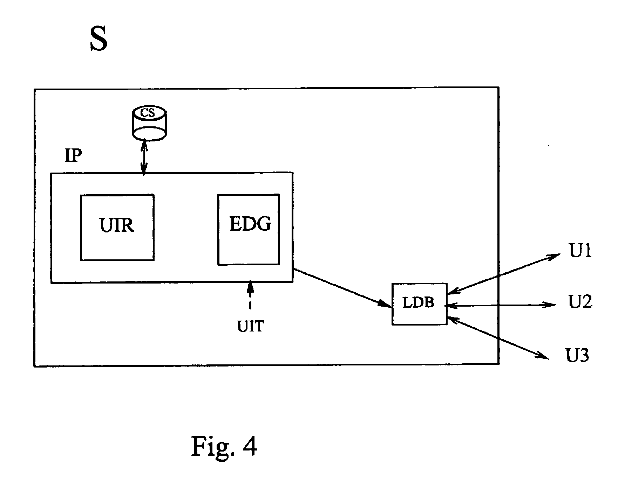

Fig. 3 and Fig. 4 show how S realizes the invention. As shown in Fig. 3, S contains a content storage entity CS where the received MXF files provided by CP are stored. It also contains multiple streamers for the possible transport options towards U1, U2 and U3 and an execution logic (not shown) that creates execution logic instances ELI for each content item requested.

In the considered embodiment a RTMP streamer RTMPP is used to target flash clients (U1), a MPEG-TS streamer MPEGTSP is used to target IPTV clients (U3) and an RTP streamer RTPP is used to target mobile clients (U2).

ELI loads the AM content from CS and AM info remains available as long as the user session and the instance exists.

Before any user can request a content item, an ingest process IP, as shown in Fig. 4, is executed for the different user entities U1, U2, U3 that S supports. IP comprises a User Information Reader UIR and an Execution Description Generator EDG. UIR extracts UI from MXF stored in CS and EDG creates an execution descriptor from the information contained in the AM and from the UI information received from UIR. This execution descriptor describes how the information on the possible actions available to the user entities can be presented to the end-users, and is in a format understood by the supported user entities. E.g. for flash based users, the descriptor can be in SWF format, for MS-IPTV users, the descriptor can be in ASP.NET format. In an alternative embodiment, some templates UIT may be available in addition (shown in dotted line in Fig. 4) to format the user interface and complement it with the information retrieved from UI. UIT makes it possible to customize the interface towards the user with the look and feel as specific for the server entity.

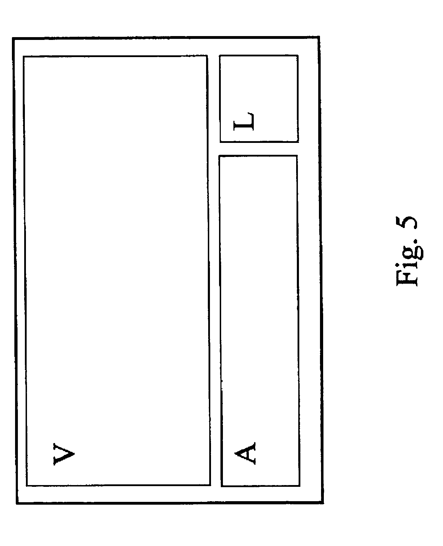

Fig. 5 shows an example of a user interface lay-out. The different areas, i.e. the video area V where the video is intended to be shown, the action area A intended to show the possible interactions and a logo area L where the logo of the producer will be shown are determined by information contained in UI. The content of V is the video retrieved from MXF, the content from A is retrieved from AM and the logo is also retrieved from UI. In a an alternative embodiment without UI in MXF, the look and feel of the representation of the possible actions in A can, depending on the embodiment, be based on user interface information locally available on server S or can be available in UIT.

As shown in Fig4, the execution descriptors are stored by S in a link storage database LDB. The actual descriptor presented to the user entity is determined by the type of user entity. The MS-IPTV client will always receive the ASP descriptor. The flash client will always receive the SWF descriptor, etc.. In a first communication with S, U1, U2 and U3 indicate their type of format and consequently the user entities can then receive the descriptor they understand. This format indication can be implicit and e.g. based on the transport protocol used or the IP address of the user entity.

In the considered embodiment S contains the execution descriptors (in LDB) as well as the MXF content (in CS). In an alternative embodiment the descriptor internally contains a link to MXF content located on a different server. Indeed, content query can be done on a server S1 containing the descriptor database, but the actual video pump (the server as described in Fig 3) may be at another server S2. Both servers could be inside a same cluster of servers or not.

Using the execution descriptor, U1, U2 and U3 are then informed of the interaction/customization actions that are possible or allowed on the requested content.

Feedback events from U1, U2, U3 indicating the requested action are handled by an event mapper EM in S as shown in Fig. 3. EM looks up in AM the action corresponding with the received feedback event and forwards this event to an audio/video data reader AV in S (see Fig. 3).

AV retrieves the multimedia data from CS for streaming via the concerned streamer. In doing so it keeps track of the corresponding time location of the sent clips or segments by means of a time cursor (not shown) on the timelines T1 or T2. When receiving an action from EM, AV checks if this action implies a change in the cursor position and executes this change as explained earlier with respect to the use of the markers. Changes in the cursor position as a result of the retrieved action can happen immediately or may be remembered until the cursor hits another mark. E.g. while the cursor is in a non-skip-able region, a jump request to the next temporal mark, may not be executed. However, it can be remembered and executed at the moment the non-skip-able region is left. After a change of the cursor position, AV goes on feeding the concerned streamer with the retrieved data corresponding to the new location of the cursor.

Interactivity and customization is thus driven by the content producer in a very flexible way. As an example, an interactive news can be created with 3 different timelines, representing politics, culture and sports. Each timeline contains multiple clips. The AM can be defined such that for instance a 'left' arrow on a remote control used by a user of a user entity denotes skip to the next clip on the current timeline and that a n 'up' arrow denotes skip to the next timeline in a looped fashion.

It has to be noted that the above embodiments are described by way of their functionality rather than by a detailed implementation, because it should be obvious for a person skilled in the art to realize the implementation of the elements of the embodiments base on this functional description.

It has also to be noted that the above described functions may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

The above description and drawings merely illustrate the principles of the invention. It will thus be appreciated that, based on this description, those skilled in the art will be able to devise various arrangements that, although not explicitly described or shown herein, embody the principles of the invention and are included within its spirit and scope. Furthermore, the examples recited herein are principally intended expressly to be only for pedagogical purposes to aid the reader in understanding the principles of the invention and the concepts contributed by the inventor(s) to furthering the art, and are to be construed as being without limitation to such specifically recited example and conditions. Moreover, all statements herein reciting principles, aspects, and embodiments of the invention, as well as specific example thereof, are intended to encompass equivalents thereof.

## Claims

1. Method for interactive delivery of multimedia content to a user entity (U1 ; U2 ; U3), said method including the steps of :
- a server entity (S) accepting from a content production entity (CP) interactive multimedia content including a plurality of content segments and control data for presentation of said multimedia content;
- said server entity (S) sending to said user entity (U1 ; U2 ; U3) presentation information based on said control data;
- said server entity (S) receiving from said user entity (U1 ; U2 ; U3) an interaction request at a receipt time, said interaction request being based on said presentation information,
- said server entity transmitting at least one identified content segment of said content segments to said user entity based on said interaction request,
**characterized in that** said control data comprises an actionmap (AM) containing time dependent action descriptors, said identified content segment being determined by activating a specific action descriptor of said actionmap in function of said receipt time and of information contained in said interaction request.

2. Method according to claim 1, **characterized in that** said control data comprises user interface data (UI), said presentation information being based on said user interface data in combination with said time dependent action descriptors.

3. Method according to claim 1, **characterized in that** said presentation information is based on server specific user interface data combined with said time dependent action descriptors.

4. Method according to claim 2, **characterized in that** said presentation information is in addition based on server specific user interface data (UIT).

5. Method according to claim 1, **characterized in that** a first part of said content segments are segments from a multimedia stream and that a second part of said content segments are segments containing additional information related to said multimedia stream.

6. Method according to claim 1, **characterized in that** said control data comprises markers (M1 ; M2 ; M-in, M-out) on at least one timeline (T1, T2) that identifies a content segment and that transmission of said identified content segment is determined in function of said action descriptor in combination with a correlation of said receipt time with said markers.

7. Content production entity (CP) for realizing a method according to claim 1, said content production entity being adapted to generate multimedia content including a plurality of content segments and control data for presentation of said multimedia content, **characterized in that** said content production entity is further adapted to generate as part of said control data an actionmap (AM) containing time dependent action descriptors for determination of at least one specific content segment of said plurality of content segments.

8. Content production entity (CP) according to clain 7, **characterized in that** said content production entity is further adapted to generate as part of said control data user interface data (UI) indicative of at least part of the lay out for making visible to a user entity the possible actions related to said action descriptors.

9. Content production entity (CP) according to claim 7, **characterized in that** said content production entity is further adapted to include in said control data markers (M1 ; M2 ; M-in, M-out) on at least one timeline (T1, T2) that determines when said content segments have to be transmitted, at least one of said markers being addressed by at least one of said action descriptors.

10. Server entity (S) for realizing a method according to claim 1, said server entity comprising receiving means adapted to receive interactive multimedia content including a plurality of content segments and control data for presentation of said multimedia content and to receive from a user entity an interaction request at a receipt time, sending means adapted to send to said user entity presentation information based on said control information and to send at least one identified content segment of said content segments to said user entity based on said interaction request, **characterized in that** said server entity also comprises processing means adapted to extract from said control data an actionmap (AM) containing time dependent action descriptors and to determine said identified content segment by activating a specific descriptor of said actionmap in function of said receipt time and of information contained in said interaction request.

11. Server entity (S) according to claim 10, **characterized in that** said processing means are also adapted to deduce from user interface data (UI) contained in said control data lay out information indicative of at least part of a lay out to be used for making visible to a user entity possible actions related to said action descriptors, and to include at least said lay out information in said presentation information.

12. Server entity (S) according to claim 10, **characterized in that** said processing means are also adapted to extract from said control data markers (M1 ; M2 ; M-in, M-out) on at least one timeline (T1 ; T2) that determines when said content segments have to be transmitted and to determine said identified content segment in function of said action descriptor in combination with a correlation of said receipt time with said markers.

13. Server entity (S) according to claim 10, **characterized in that** said processing means are also adapted to trigger said sending means to send a request for said identified content segment to another server as result of activating said specific descriptor.

14. Server entity (S) according to claim 11, **characterized in that** said server entity also contains storage means for storing local server user interface information (UIT) indicative of at least part of a local specific lay out to be used for making visible to a user entity possible actions related to said action descriptors, said processing means being adapted to combine said local server user information with said lay out information to obtain combined lay out information and to include said combined lay out information in said presentation information.

15. Server entity according to claim 10, **characterized in that** said server entity also contains storage means for storing local server user interface information indicative of a lay out to be used for making visible to a user entity possible actions related to said action descriptors, said processing means being adapted to include said local server interface information in said presentation information.
